# FASCICULE DE BREVET EUROPEEN

(11) **EP 2 208 635 B1**
(45) Date de publication et mention de la délivrance du brevet: **07.09.2011**
(21) Numéro de dépôt: 10290013.1
(22) Date de dépôt: 13.01.2010
(51) Int. Cl.: B60N 2/24, B60R 22/02, B60R 22/26

(54) **Siège pour véhicule équipé d'un harnais**
Fahrzeugsitz mit Sicherheitsgurt
Vehicle seat with a harness

(30) Priorité: 19.01.2009 FR 0900225
(43) Date de publication de la demande: 21.07.2010
(73) Titulaire: NEXTER Systems, 42328 Roanne Cedex (FR)
(72) Inventeur: Briquet, Frédéric, 18023 Bourges Cedex (FR); Jacquemont, Jacky, 18023 Bourges Cedex (FR)
(74) Mandataire: Célanie, Christian

(56) Documents cités:
- WO-A-2006/129112
- DE-B3-102007 002 371
- DE-B3-102007 011 962
- GB-A- 2 387 537
- US-A1- 2005 264 082

## Description

Le domaine technique de l'invention est celui des sièges pour véhicules et en particulier des sièges pour véhicules blindés.

Les sièges automobiles comportent le plus souvent une ceinture de sécurité qui associe une sangle ventrale et une sangle pectorale en biais. Le maintien assuré par de telles ceintures est satisfaisant dans les conditions d'emploi habituelles.

Il est cependant classique aujourd'hui de munir un siège de véhicule de harnais permettant d'assurer un maintien plus ferme de l'occupant du siège. Les harnais comportent généralement une sangle ventrale sensiblement horizontale et deux sangles d'épaule qui assurent le maintien de l'usager en appui contre le dossier du siège.

Un tel maintien des deux épaules est particulièrement important dans les véhicules automobiles rapides ou dans les véhicules militaires. En effet ces derniers subissent des chocs violents lors des phases de roulage en tout terrain, chocs ayant des directions variables. Il est donc nécessaire d'assurer un maintien ferme et symétrique du dos de l'usager.

Par ailleurs les véhicules blindés et en particulier les véhicules de transport de troupes doivent comporter des sièges qui assurent une assise sécurisée à plusieurs fantassins mais qui en même temps occupent un volume réduit dans l'habitacle.

De telles exigences sont plutôt contradictoires, la légèreté de l'assise semblant peu compatible avec la fermeté du maintien.

On connaît par le brevet US2005/0264082 un siège pour véhicule blindé correspondant au préambule de la revendication 1 qui comprend une nacelle tubulaire suspendue au niveau d'un plafond du véhicule. La nacelle est articulée pour permettre le repli du siège. Un harnais de maintien comprend deux sangles d'épaule qui traversent le dossier du siège et sont fixées au niveau d'un point d'attache commun solidaire d'une partie basse de la nacelle.

Un tel siège présente des inconvénients.

Tout d'abord les deux sangles d'épaule du harnais ont un seul et même point de fixation au niveau de l'extrémité d'une sangle fixée à la nacelle. Il en résulte un risque de torsion de cette sangle commune ce qui réduit la rigidité du maintien notamment en cas d'accélérations parallèles au dossier. Or ces accélérations sont la règle dans les véhicules de transport de troupes pour lesquels les sièges sont le plus souvent fixés avec leurs dossiers parallèles au sens de la marche du véhicule.

Ensuite les sangles d'épaule du harnais forment un angle avec l'horizontale voisin de 90°. Un tel type de maintien est insuffisamment ergonomique. Le confort et l'efficacité du maintien nécessitent en effet un angle de ces sangles avec l'horizontale qui est inférieur à 45°. Une telle condition est en particulier précisée par le règlement communautaire R16 sur l'installation des ceintures dans les véhicules (directive CE 77/541 du 28/06/1977 et notamment sa modification 96/36 du 17/07/1996).

Enfin le siège proposé par US2005/0264082 présente un encombrement encore trop important puisqu'il ne permet pas d'avoir un accès facile aux zones de l'habitacle situées derrière le dossier du siège.

L'invention a pour but de proposer un siège qui assure un maintien efficace et ergonomique de l'usager, et ce quelle que soit sa corpulence (comprise entre les limites des 5^{ème} percentile féminin et 95^{ème} percentiles masculin de la population).

Le siège selon l'invention est de structure légère et démontable mais il assure cependant un maintien efficace en cas d'accélérations longitudinales (parallèles au dossier du siège).

Ainsi l'invention a pour objet un siège pour véhicule incorporant un dossier solidaire d'une structure du véhicule et un harnais comportant deux sangles d'épaule et permettant le maintien de l'occupant du siège en appui contre le dossier, le dossier comportant des orifices permettant le passage d'une première extrémité des sangles du harnais qui comporte un organe destiné à coopérer avec un premier moyen de fixation, siège caractérisé en ce que chaque sangle traverse un passant fixe, positionné en arrière du dossier et interposé entre ce dernier et le premier moyen de fixation, le passant fixe étant solidaire de la structure du véhicule et positionné en hauteur de façon à assurer une orientation des sangles des harnais avec un angle par rapport à l'horizontale compris entre 0° et 45°.

Les passants fixes seront avantageusement solidaires de bandes souples sensiblement verticales fixées entre un point d'attache haut et un point d'attache bas, ces deux points étant solidaires de la structure du véhicule.

Les bandes souples pourront comporter une partie de longueur fixe et une partie de longueur réglable permettant d'assurer une tension de la bande, le passant étant disposé entre les deux parties de la bande.

Les bandes souples pourront être fixées au niveau du point d'attache haut par un moyen de liaison détachable.

Le point d'attache bas de chaque bande souple pourra être constitué par le premier moyen de fixation de la sangle associée à ladite bande.

La largeur des bandes sera avantageusement supérieure ou égale à la largeur des sangles du harnais.

Selon un mode particulier de réalisation, le dossier du siège pourra être un dossier souple fixé entre une assise solidaire de la structure et un profilé lui aussi solidaire de la structure et disposé au voisinage d'un plafond du véhicule, le dossier étant fixé d'une façon détachable au niveau du profilé

L'invention sera mieux comprise à la lecture du descriptif qui va suivre d'un mode particulier de réalisation, description faite en référence aux dessins annexés et dans lesquels :
- la figure 1 est une vue en perspective arrière d'un siège selon un mode de réalisation de l'invention,
- la figure 2 représente les bandes souples seules,
- les figures 3a et 3b sont deux vues d'une utilisation d'un siège selon l'invention par une personne du 5^{ème} percentile féminin, la figure 3a étant une vue latérale et la figure 3b une vue en perspective de trois quarts avant,
- les figures 4a et 4b sont deux vues d'une utilisation d'un siège selon l'invention par une personne du 95^{ème} percentile masculin, la figure 4a étant une vue latérale et la figure 4b une vue en perspective de trois quarts avant.

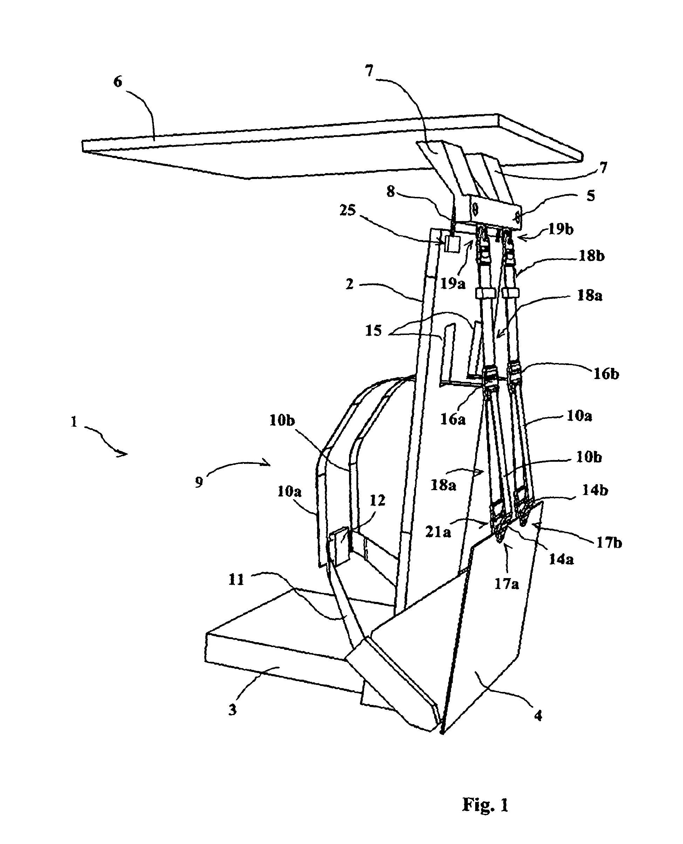

En se reportant à la figure 1, un siège 1 selon un mode de réalisation de l'invention comprend un dossier 2 et une assise 3. L'assise 3 est solidaire d'une paroi 4 de la structure du véhicule. Le dossier 2 est un dossier souple (par exemple en toile ou en matériau synthétique) qui est fixé entre l'assise 3 et un profilé 5 qui est lui aussi solidaire de la structure du véhicule.

Le profilé 5 est voisin du plafond 6 du véhicule auquel il est fixé par des pattes 7. Le dossier 2 est fixé d'une façon détachable au niveau du profilé 5, par exemple par des crochets 8. Il est ainsi aisé de détacher le dossier 2 pour permettre un accès à l'espace situé derrière le siège 1 et qui sert de zone de rangement.

Le siège 1 porte aussi un harnais 9 qui comporte deux sangles d'épaule 10a, 10b et une sangle ventrale 11.

La sangle ventrale 11 se ferme par une attache rapide 12.

Les sangles d'épaule 10a, 10b permettent le maintien de l'occupant du siège en appui contre le dossier 2. Ces sangles d'épaule sont solidaires d'un côté de la sangle ventrale 11 et elles portent chacune une première extrémité qui comporte un organe 14a, 14b (ici une patte) qui est destiné à coopérer avec un premier moyen de fixation 17a, 17b (ici une vis) assurant la solidarisation de la patte 14a, 14b et de la paroi 4 de la structure du véhicule. D'une façon classique, les sangles d'épaule 10a, 10b et la sangle ventrale 11 ont des longueurs réglables pour permettre l'adaptation du harnais 9 à différentes morphologies d'occupants (moyens de réglage non représentés).

Le dossier souple 2 comporte deux orifices 15 qui permettent chacun le passage d'une des sangles 10a, 10b du harnais 9. Les dimensions de ces orifices sont suffisamment grandes pour permettre une adaptation aux écarts anthropométriques entre le 5^{ème} percentile féminin et le 95^{ème} percentile masculin.

Conformément à une caractéristique essentielle de l'invention, chaque sangle 10a, 10b traverse un passant fixe 16a,16b qui est positionné en arrière du dossier 2 et qui est ainsi interposé entre le dossier 2 et le premier moyen de fixation.

Chaque passant 16a, 16b est solidaire d'une bande souple 18a, 18b qui est sensiblement verticale.

Ces bandes 18a, 18b sont fixées entre un point d'attache haut 19a, 19b et un point d'attache bas solidaire de la paroi 4. Ces deux points sont solidaires de la structure du véhicule.

Le point d'attache bas de chaque bande souple est ici constitué par le premier moyen de fixation 17a, 17b de la sangle 10a, 10b associée à ladite bande 18a, 18b.

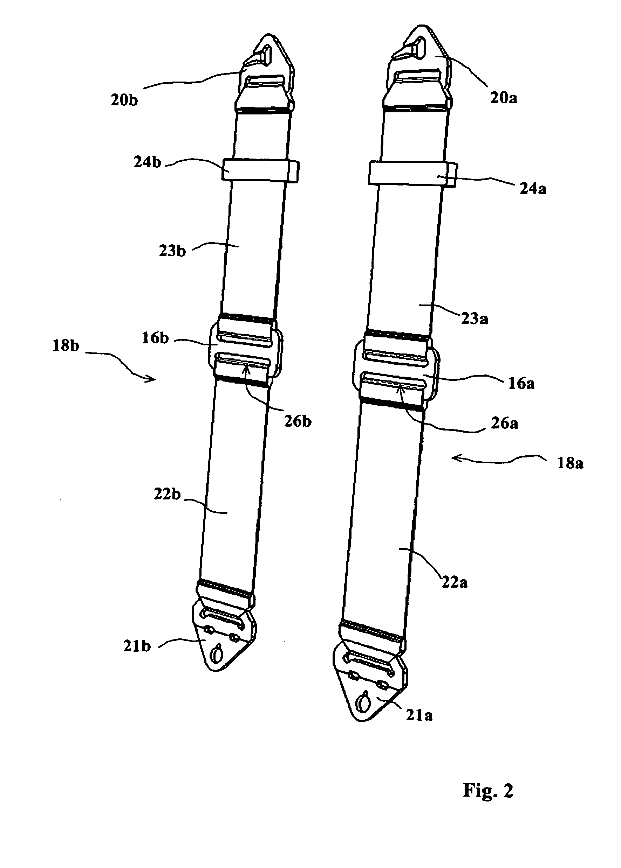

Le point d'attache haut 19a, 19b est disposé sur le profilé 5 qui comportera des trous appropriés permettant la fixation d'un moyen de liaison rapide détachable, par exemple un mousqueton 20a, 20b solidaire de l'extrémité de la bande 18a, 18b (voir figure 2).

Les bandes souples 18a, 18b sont donc ainsi solidaires, d'un côté du profilé 5 voisin du plafond 6, et de l'autre de la paroi 4.

La figure 2 montre de façon plus précise les bandes souples 18a, 18b seules. On remarque que chaque bande 18a,18b comporte une partie de longueur fixe 22a, 22b qui s'étend entre le passant 16a, 16b et une patte inférieure 21a, 21b et une partie de longueur réglable 23a,23b disposée entre le passant 16a, 16b et le mousqueton supérieur 20a, 20b. La fente inférieure 26a, 26b de chaque passant 16a, 16b aura une largeur suffisante pour laisser passer à la fois la partie fixe 22a, 22b de la bande et la sangle 10a, 10b du harnais.

Le réglage de la longueur de la bande se fait à l'aide d'un ajusteur 24a, 24b qui assure le blocage de la partie réglable 23a, 23b de la bande à la longueur souhaitée.

Après fixation du mousqueton 20a, 20b sur le profilé 5 on peut ainsi tendre les bandes 18a, 18b. Le réglage permet de prendre en compte facilement les dispersions de dimensions au niveau de la structure du véhicule et en particulier la variabilité de la distance entre les points d'attache haut et bas d'un véhicule à l'autre.

On notera par ailleurs que les crochets 8 fixés au dossier souple 2 sont eux aussi reliés au dossier 2 par des sangles à longueurs réglables 25.

La partie inférieure 21a, 21b de chaque bande 18a, 18b étant de longueur fixe, le passant 16a, 16b se trouve toujours positionné au même niveau verticalement par rapport à la structure (paroi 4). Ce passant 16a, 16b sera positionné en hauteur de façon à assurer une orientation des sangles des harnais avec un angle par rapport à l'horizontale Hz compris entre 0° et 45°.

Concrètement le passant 16a, 16b se trouvera ici sensiblement en regard du bord inférieur de chaque ouverture 15 du dossier 2.

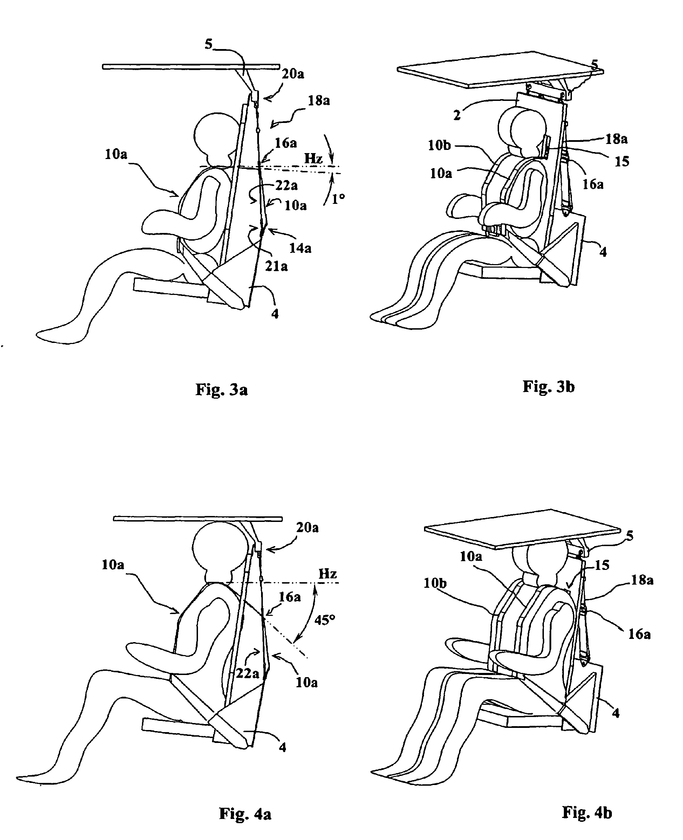

Les figures 3a et 3b montrent une personne du 5^{ème} percentile féminin utilisant le siège selon l'invention.

On voit sur ces figures que, pour une petite morphologie d'usager, les sangles d'épaule 10a, 10b sont orientées sensiblement horizontalement (l'angle formé par les sangles 10a, 10b avec l'horizontale Hz est d'environ 1°).

Les sangles 10a, 10b sont alors sensiblement en contact avec le bord inférieur des ouvertures 15 du dossier 2.

Les figures 4a et 4b montrent le même siège 2 utilisé par une personne du 95^{ème} percentile masculin. Pour la morphologie d'usager la plus forte on voit donc que les sangles d'épaule 10a, 10b forment un angle avec l'horizontale Hz qui est de 45°. Les sangles 10a,10b sont alors proches du bord supérieur des ouvertures 15.

On voit donc qu'avec le siège selon l'invention, les sangles forment avec l'horizontale un angle compris entre 1° et 45° ce qui est conforme aux normes ergonomiques requises pour un maintien ferme et confortable de l'ensemble de la population. L'invention assure un tel résultat tout en mettant en oeuvre un siège 1 de structure légère au dossier 2 souple. Ceci est obtenu grâce aux bandes 18a, 18b qui permettent de transférer les contraintes mécaniques et ergonomiques du maintien sur la structure même du véhicule (profilé 5 et plaque 4) tout en permettant un démontage rapide des bandes 18a, 18b (grâce aux mousquetons 20a,20b) pour permettre un accès à l'espace derrière les dossiers 2.

Les passants 16a, 16b permettent de positionner ergonomiquement les sangles 10a, 10b par rapport aux usagers malgré une fixation des sangles en partie basse du véhicule.

Avantageusement on donnera aux bandes 18a, 18b une largeur supérieure à celle des sangles 10a, 10b. Une telle disposition permet de rigidifier encore plus le dispositif vis à vis de la torsion des bandes 18a, 18b. On donne ainsi également aux passants 16a, 16b une largeur plus importante ce qui facilite le passage des sangles 10a, 10b dans les passants. On donnera par exemple aux bandes 18a, 18b une largeur qui est supérieure ou égale à la largeur des sangles 10a, 10b plus 20%.

A titre de variante on pourra définir un siège dans lequel chaque passant fixe n'est pas solidaire d'une bande souple mais est fixé à une barre verticale rigide. On choisira les dimensions des barres pour assurer la rigidité souhaitée pour le maintien des sangles. Une telle solution rend cependant plus difficile l'accès à l'espace de rangement en arrière du dossier.

## Revendications

1. Siège (1) pour véhicule incorporant un dossier (2) solidaire d'une structure (4, 5) du véhicule et un harnais (9) comportant deux sangles d'épaule (10a, 10b) et permettant le maintien de l'occupant du siège en appui contre le dossier (2), le dossier comportant des orifices (15) permettant le passage d'une première extrémité des sangles (10a, 10b) du harnais qui comporte un organe (14a,14b) destiné à coopérer avec un premier moyen de fixation (17a, 17b), siège ***caractérisé en ce que*** chaque sangle (10a, 10b) traverse un passant fixe (16a, 16b) positionné en arrière du dossier (2) et interposé entre ce dernier et le premier moyen de fixation, le passant fixe (16a, 16b) étant solidaire de la structure du véhicule et positionné en hauteur de façon à assurer une orientation des sangles (10a, 10b) des harnais avec un angle par rapport à l'horizontale compris entre 0° et 45°.

2. Siège pour véhicule selon la revendication 1, **caractérisé en ce que** les passants fixes (16a, 16b) sont solidaires de bandes souples (18a, 18b) sensiblement verticales fixées entre un point d'attache haut (19a, 19b) et un point d'attache bas, ces deux points étant solidaires de la structure du véhicule.

3. Siège pour véhicule selon la revendication 2, **caractérisé en ce que** les bandes souples (18a, 18b) comportent une partie (22a, 22b) de longueur fixe et une partie (23a, 23b) de longueur réglable permettant d'assurer une tension de la bande (18a, 18b), le passant (16a, 16b) étant disposé entre les deux parties de la bande.

4. Siège pour véhicule selon une des revendications 2 ou 3, **caractérisé en ce que** les bandes souples (18a, 18b) sont fixées au niveau du point d'attache haut par un moyen de liaison détachable (20a, 20b).

5. Siège pour véhicule selon la revendication 2 ou 3, **caractérisé en ce que** le point d'attache bas de chaque bande souple est constitué par le premier moyen de fixation (17a, 17b) de la sangle (10a, 10b) associée à ladite bande (18a, 18b).

6. Siège pour véhicule selon une des revendications 2 à 5, **caractérisé en ce que** la largeur des bandes (18a, 18b) est supérieure ou égale à la largeur des sangles (10a, 10b) du harnais.

7. Siège pour véhicule selon une des revendications 1 à 6, **caractérisé en ce que** le dossier (2) du siège est un dossier souple qui est fixé entre une assise (3) solidaire de la structure et un profilé (5) lui aussi solidaire de la structure et disposé au voisinage d'un plafond du véhicule, le dossier (2) étant fixé d'une façon détachable au niveau du profilé (5).

## Claims

1. A vehicle seat (1) incorporating a back (2) integral with a structure (4, 5) of the vehicle and a harness (9) incorporating two shoulder belts (10a, 10b) and enabling the seat's occupant to be restrained against the backrest (2), such backrest incorporating openings (15) enabling the passage of a first end of the harness belts (10a, 10b), which incorporates an organ (14a, 14b) intended to cooperate with a first attachment means (17a, 17b), such seat **characterised by** the fact that each belt (10a, 10b) passes through a fixed loop (16a, 16b), positioned to the rear of the backrest (2) and positioned between the latter and the first attachment means, the fixed loop (16a, 16b) being integral with the vehicle structure and positioned at a height so as to ensure an orientation of the harness belts (10a, 10b) at an angle with respect to the horizontal that is of between 0° and 45°.

2. A vehicle seat according to Claim 1, **characterised by** the fact that the fixed loops (16a, 16b) are integral with flexible substantially vertical straps (18a, 18b) fixed between a high attachment point (19a, 19b) and a low attachment point, these two points being integral with the structure of the vehicle.

3. A vehicle seat according to Claim 2, **characterised by** the fact that the flexible straps (18a, 18b) incorporate a part of a fixed length (22a, 22b) and a part of an adjustable length (23a, 23b) to ensure the tension of the strap (18a, 18b), the loop (16a, 16b) being positioned between the two parts of the strap.

4. A vehicle seat according to one of Claims 2 or 3, **characterised by** the fact that the flexible straps (18a, 18b) fastened at a high attachment point by removable linking means (20a, 20b),

5. A vehicle seat according to Claim 2 or 3, **characterised by** the fact that the low attachment point of each flexible strap is constituted by the first attachment means (17a, 17b) of the belt (10a, 10b) associated with said strap (18a, 18b).

6. A vehicle seat according to one of Claims 2 to 5, **characterised by** the fact that the width of the straps (18a, 18b) is greater than or equal to the width of the harness belts (10a, 10b).

7. A vehicle seat according to one of Claims 1 to 6, **characterised by** the fact that the backrest (2) is a flexible back fixed between a seat (3) integral with the structure and a section (5) also integral with the structure and arranged in the vicinity of a roof of the vehicle, the back (2) being fixed in a removable manner to the section (5).

## Patentansprüche

1. Sitz (1) für Fahrzeug, umfassend eine Rückenlehne (2), die fest mit einer Fahrzeugstruktur (4, 5) verbunden ist, und ein Gurtzeug (9), welches zwei Schultergurte (10a, 10b) aufweist und das Halten der auf dem Sitz sitzenden Person gegen die Rückenlehne (2) abgestützt ermöglicht, wobei die Rückenlehne Öffnungen (15) aufweist, die das Durchführen eines ersten Endes der Gurte (10a, 10b) des Gurtzeugs ermöglicht, das ein Organ (14a, 14b) umfasst, das dazu bestimmt ist, mit einem ersten Befestigungsmittel (17a, 17b) zusammenzuwirken, wobei der Sitz ***dadurch gekennzeichnet ist, dass*** jeder Gurt (10a, 10b) eine feste Schlaufe (16a, 16b) durchquert, die hinter der Rückenlehne (2) positioniert und zwischen dieser und dem ersten Befestigungsmittel angeordnet ist, wobei die feste Schlaufe (16a, 16b) fest mit der Fahrzeugstruktur verbunden ist und dergestalt in einer Höhe positioniert ist, dass eine Ausrichtung der Gurte (10a, 10b) der Gurtzeuge mit einem Winkel bezogen auf die Horizontale zwischen 0° und 45° gewährleistet ist.

2. Fahrzeugsitz nach Anspruch 1, **dadurch gekennzeichnet, dass** die festen Schlaufen (16a, 16b) fest mit flexiblen, weitestgehend senkrechten Bändern (18a, 18b) verbunden sind, die zwischen einem oberen Befestigungspunkt (19a, 19b) und einem unteren Befestigungspunkt befestigt sind, wobei diese beiden Punkte fest mit der Fahrzeugstruktur verbunden sind.

3. Fahrzeugsitz nach Anspruch 2, **dadurch gekennzeichnet, dass** die flexiblen Streifen (18a, 18b) einen Teil (22a, 22b) mit fester Länge und einen Teil (23a, 23b) mit verstellbarer Länge, der es ermöglicht, eine Spannung des Bands (18a, 18b) aufrechtzuerhalten, umfassen, wobei die Schlaufe (16a, 16b) zwischen den beiden Teilen des Bandes angeordnet ist.

4. Fahrzeugsitz nach einem der Ansprüche 2 oder 3, **dadurch gekennzeichnet, dass** die flexiblen Streifen (18a, 18b) im Bereich des oberen Befestigungspunkts durch ein abnehmbares Verbindungsmittel (20a, 20b) befestigt sind.

5. Fahrzeugsitz nach Anspruch 2 oder 3, **dadurch gekennzeichnet, dass** der untere Befestigungspunkt jedes flexiblen Streifens durch das erste Befestigungsmittel (17a, 17b) des Gurts (10a, 10b), der dem genannten Band (18a, 18b) zugeordnet ist, gebildet wird.

6. Fahrzeugsitz nach einem der Ansprüche 2 bis 5, **dadurch gekennzeichnet, dass** die Breite der Streifen (18a, 18b) größer oder gleich der Breite der Gurte (10a, 10b) des Gurtzeugs ist.

7. Fahrzeugsitz nach einem der Ansprüche 1 bis 6, **dadurch gekennzeichnet, dass** die Rückenlehne (2) des Sitzes eine flexible Rückenlehne ist, die zwischen einer Sitzfläche (3), die fest mit der Struktur verbunden ist, und einem Profil (5), welches ebenfalls fest mit der Struktur verbunden ist und in der Nähe eines Dachs des Fahrzeugs angeordnet ist, befestigt ist, wobei die Rückenlehne (2) abnehmbar im Bereich des Profils (5) befestigt ist.
